# EUROPEAN PATENT APPLICATION

(11) **EP 1 513 078 A1**
(43) Date of publication of application: **09.03.2005**
(21) Application number: 03733193.1
(22) Date of filing: 30.05.2003
(51) Int. Cl.: G06F 17/30

(54) **INFORMATION PROVIDING SYSTEM**

(30) Priority: 30.05.2002 JP 2002156928; 29.05.2003 JP 2002153421
(71) Applicant: DIRECTOR GENERAL OF NATIONAL INSTITUTE OF ADVANCED INDUSTRIAL SCIENCE AND TECHNOLOGY, JAPAN MINISTRY OF ECONOMY, TRADE & IND., Chiyoda-ku Tokyo (JP); SHARP KABUSHIKI KAISHA, Osaka 545-8522 (JP)
(72) Inventor: NISHIMURA, T., c/o Tokyo Waterfront, Koto-ku, Tokyo (JP); IHARA, Masanori, c/o Sharp Kabushiki Kaisha, Osaka-shi, Osaka 545-8522 (JP)
(74) Representative: Hall, Matthew Benjamin
(86) International application number: PCT/JP2003/006851
(87) International publication number: WO 2003/102816

(57) **Abstract**

The invention provides a novel information providing system as well as a mobile information terminal and an information processing device which are used for the information providing system. In the information providing system, information to be registered in a database is provided from a mobile information terminal to an information processing device. The mobile information terminal acquires speech information based on speech inputted thereto as registration information during an information registration mode, also acquires position information of the mobile information terminal as registration information during the information registration mode, and accepts the inputs of additional information relevant to the speech information and the position information as registration information during the information registration mode and then transmits these information to the information processing device, while the information processing device receives the speech information, the position information and the additional information sent from the mobile information terminal and stores the received informationin the database, relating them to each other. Thereby, the database registration and database search of various information such as city information can be carried out easily and accurately by anyone with the new information providing system.

## Description

### Technical Field

The present invention relates to an information providing system, more particularly to a novel information providing system capable of easily performing the database registration and database search of various information such as city information, and a mobile information terminal and an information processing device used for the information providing system.

### Background Art

In general, the system for the database registration and database search of various information such as city information has its data in the form of computerized drawing data or letter-symbol data like a map on a car navigation system, a map on the Internet and such.

However, the information computerization needs to be accurately performed by a skilled person accustomed to manipulation of computerization devices, for example an input device of a keyboard or mouse, an image capture device, a map toad program, etc. Thus, not everybody is capable of easily handling the computerization and database registration. This can be similarly said about the city information.

Also, the database search requires, for example, keyboard input manipulation on a computer, and is inconvenient to a person who is unaccustomed to such manipulations.

Nowadays, a mobile terminal such as a cellular phone has become capable to retrieve and obtain city information. However, its significantly small input keys do not provide easy manipulation for an unskilled person and even for a skilled person, which force a longer operation time.

Considering the above, a registration or retrieval method with voice input might be employed. But, the prior-art speech recognition technology has poor accuracy of vocabulary data conversion regarding non-dictionary vocabularies such as proper nouns, coined words, abbreviated words, colloquial words, etc., and in particular, city information in which proper names are frequently used cannot be recognized with favorable accuracy.

In view of the above, the present invention has an object to provide a novel information providing system capable to make the database registration and database search of various information including city information easy and highly-accurate for anybody, and another object to provide a mobile information terminal and an information processing device which are used for the information providing system.

### Disclosure of Invention

In order to accomplish the object, the present invention first provides an information providing system in which information to be registered in a database is provided from a mobile information terminal to an information processing device, characterized in that said mobile information terminal comprising a speech input unit capable of inputting speech as registration information during an information registration mode; a speech processing unit capable of acquiring speech information based on the speech inputted by the speech input unit; a position verification unit capable of acquiring position information of said mobile information terminal as registration information during the information registration mode; an additional information input unit capable of inputting additional information relevant to the speech information and the position information as registration information during the information registration mode; and a transmitter unit capable of transmitting to the information processing device, the speech information obtained by the speech processing unit, the position information obtained by the position verification unit and the additional information inputted by the additional information input unit; and also characterized in that said information processing device comprising a receiver unit capable of receiving the speech information, the position information and the additional information sent from said mobile information terminal; and an information processing unit capable of mutually relating and storing the speech information, the position information and the additional information received by the receiver unit, in the database.

Secondly, the invention provides an information providing system in which information registered in a database is provided from an information processing device to a mobile information terminal having made a request for information provision, characterized in that said mobile information terminal comprising a speech input unit capable of inputting speech relevant to requested information as a search key during an information provision request mode; a speech processing unit capable of acquiring speech information based on the speech inputted by the speech input unit; a position verification unit capable of acquiring position information of said mobile information terminal as a search key during the information provision request mode; a transmitter unit capable of transmitting to the information processing device, the speech information obtained by the speech processing unit and the position information obtained by the position verification unit; and a receiver unit capable of receiving additional information sent from the information processing device, as the requested information; and also characterized in that said information processing device comprising a receiver unit capable of receiving the speech information and the position information sent from said mobile information terminal; an information processing unit capable of retrieving the additional information relevant to the speech information and the position information received by the receiver unit, from the database having speech information, position information and additional information mutually associated and prestored therein; and a transmitter unit capable of transmitting the additional information retrieved by the information processing unit, to said mobile information terminal.

Thirdly, the invention provides an information providing system in which information to be registered in a database is provided from a mobile information terminal to an information processing device and information registered in the database is provided from the information processing device to a mobile information terminal having made a request for information provision, characterized in that said mobile information terminal comprising a speech input unit capable of inputting speech as registration information during an information registration mode, and capable of inputting speech relevant to requested information as a search key during an information provision request mode; a speech processing unit capable of acquiring speech information based on the speech inputted by the speech input unit during the information registration mode, and capable of acquiring speech information based on the speech inputted by the speech input unit during the information provision request mode; a position verification unit capable of acquiring position information of said mobile information terminal as registration information during the information registration mode, and capable of acquiring position information of said mobile information terminal as a search key during the information provision request mode; an additional information input unit capable of inputting additional information relevant to the speech information and the position information as registration information during the information registration mode; a transmitter unit capable of transmitting the speech information obtained by the speech processing unit, the position information obtained by the position verification unit and the additional information inputted by the additional information input unit, to the information processing device during the information registration mode, and capable of transmitting the speech information obtained by the speech processing unit and the position information obtained by the position verification unit, to the information processing device during the information provision request mode; and a receiver unit capable of receiving additional information sent from the information processing device, as the requested information; and also characterized in that said information processing device comprising a receiver unit capable of receiving the speech information, the position information and the additional information sent from said mobile information terminal during the information registration mode, and capable of receiving the speech information and the position information sent from said mobile information terminal during the information provision request mode; an information processing unit capable of mutually relating and storing the speech information, the position information and the additional information received by the receiver unit during the information registration mode, in the database, and capable of retrieving the additional information relevant to the speech information and the position information received by the receiver unit, from the database, during the information provision request mode; and a transmitter unit capable of transmitting the additional information retrieved by the information processing unit, to said mobile information terminal.

Further, in order to accomplish the object, the invention fourthly provides an information providing system in which information to be registered in a database is provided from a mobile information terminal to an information processing device, characterized in that said mobile information terminal comprising a speech input unit capable of inputting speech as registration information during an information registration mode; a speech processing unit capable of acquiring speech information based on the speech inputted by the speech input unit; a position verification unit capable of acquiring position information of said mobile information terminal as registration information during the information registration mode; an image capture unit capable of capturing an image as registration information during the information registration mode; an image processing unit capable of acquiring image information based on the image captured by the image capture unit; an additional information input unit capable of inputting additional information relevant to the speech information, the position information and the image information as registration information during the information registration mode; and a transmitter unit capable of transmitting to said information processing device, the speech information obtained by the speech processing unit, the position information obtained by the position verification unit, the image information obtained by the image processing unit and the additional information inputted by the additional information input unit; and also characterized in that said information processing device comprising a receiver unit capable of receiving the speech information, the position information, the image information and the additional information sent from said mobile information terminal; and an information processing unit capable of associating the speech information, the position information, and the image information and the additional information received by the receiver unit, with one another, and then stores them in the database.

Fifthly, the invention provides an information providing system in which information registered in a database is provided from an information providing device to a mobile information terminal having made a request for information provision, characterized in that said mobile information terminal comprising a speech input unit capable of inputting speech relevant to requested information as a search key during an information provision request mode; a speech processing unit capable of acquiring speech information based on the speech inputted by the speech input unit; a position verification unit capable of acquiring position information of said mobile information terminal as a search key during the information provision request mode; an image capture unit capable of capturing an image as a search key during the information provision request mode; an image processing unit capable of acquiring image information based on the image captured by the image capture unit; a transmitter unit capable of transmitting to said information processing device, the speech information obtained by the speech processing unit, the position information obtained by the position verification unit and the image information obtained by the image processing unit; and a receiver unit capable of receiving additional information sent from said information processing device, as the requested information; and also characterized in that said information processing device comprising a receiver unit capable of receiving the speech information, the position information and the image information sent from said mobile information terminal; an information processing unit capable of retrieving the additional information relevant to the speech information, the position information and the image information received by the receiver unit, from the database having speech information, position information, image information and additional information mutually associated and prestored therein; and a transmitter unit capable of transmitting the additional information retrieved by the information processing unit, to said mobile information terminal.

Sixthly, the invention provides an information providing system in which information to be registered in a database is provided from a mobile information terminal to an information processing device and information registered in the database is provided from said information processing device to a mobile information terminal having made a request for information provision, characterized in that said mobile information terminal comprising a speech input unit capable of inputting speech as registration information during an information registration mode, and capable of inputting speech relevant to requested information as a search key during an information provision request mode; a speech processing unit capable of acquiring speech information based on the speech inputted by the speech input unit during the information registration mode, and capable of acquiring speech information based on the speech inputted by the speech input unit during the information provision request mode; a position verification unit capable of acquiring position information of said mobile information terminal as registration information during the information registration mode, and capable of acquiring position information of said mobile information terminal as a search key during the information provision request mode; an image capture unit capable of capturing an image as registration information during the information registration mode, and capable of capturing an image as a search key during the information provision request mode; an image processing unit capable of acquiring image information based on the image captured by the image capture unit during the information registration mode, and capable of acquiring image information based on the image captured by the image capture unit during the information provision request mode; an additional information input unit capable of inputting additional information relevant to the speech information, the position information and the image information as registration information during the information registration mode; a transmitter unit capable of transmitting the speech information obtained by the speech processing unit, the position information obtained by the position verification unit, the image information obtained by the image processing unit and the additional information inputted by the additional information input unit, to said information processing device during the information registration mode, and capable of transmitting the speech information obtained by the speech processing unit, the position information obtained by the position verification unit and the image information obtained by the image processing unit, to said information processing device during the information provision request mode; and a receiver unit capable of receiving additional information sent from said information processing device, as the requested information; and also characterized in that said information processing device comprising a receiver unit capable of receiving the speech information, the position information, the image information and the additional information sent from said mobile information terminal during the information registration mode, and capable of receiving the speech information, the position information and the image information sent from said mobile information terminal during the information provision request mode; an information processing unit capable of mutually relating and storing the speech information, the position information, the image information and the additional information received by the receiver unit, in the database, during the information registration mode, in the database, and capable of retrieving the additional information relevant to the speech information, the position information and the image information received by the receiver unit during the information provision request mode; and a transmitter unit capable of transmitting the additional information retrieved by the information processing unit, to said mobile information terminal.

And, the invention seventhly provides an information providing system characterized in that the speech information is information which contains a phoneme string of the speech, and it eighthly provides an information providing system characterized in that the image information is features of the image.

Furthermore, in order to accomplish the object, the invention provides a mobile information terminal which provides information to be registered in a database to an information processing device, comprising a speech input unit capable of inputting speech as registration information during an information registration mode; a speech processing unit capable of acquiring speech information based on the speech inputted by the speech input unit; a position verification unit capable of acquiring position information of said mobile information terminal as registration information during the information registration mode; an additional information input unit capable of inputting additional information relevant to the speech information and the position information as registration information during the information registration mode; and a transmitter unit capable of transmitting the speech information obtained by the speech processing unit, the position information obtained by the position verification unit and the additional information inputted by the additional information input unit, to said information processing device capable of mutually relating and storing them in the database; it tenthly provides a mobile information terminal to which information registered in a database is provided from an information processing device by making a request for information provision, comprising a speech input unit capable of inputting speech relevant to requested information as a search key during an information provision request mode; a speech processing unit capable of acquiring speech information based on the speech inputted by the speech input unit; a position verification unit capable of acquiring position information of said mobile information terminal as a search key during the information provision request mode; a transmitter unit capable of transmitting to said information processing device, the speech information obtained by the speech processing unit and the position information obtained by the position verification unit; and a receiver unit capable of receiving as the requested information, additional information relevant to the speech information and the position information as has been retrieved and sent from the database having speech information, position information and additional information mutually related and prestored therein by said information processing device; it eleventhly provides a mobile information terminal which provides information to be registered in a database, to an information processing device, comprising a speech input unit capable of inputting speech as registration information during an information registration mode; a speech processing unit capable of acquiring speech information based on the speech inputted by the speech input unit; a position verification unit capable of acquiring position information of said mobile information terminal as registration information during the information registration mode; an image capture unit capable of capturing an image as registration information during the information registration mode; an image processing unit capable of acquiring image information based on the image captured by the image capture unit; an additional information input unit capable of inputting additional information relevant to the speech information, the position information and the image information as registration information during the information registration mode; and a transmitter unit capable of transmitting the speech information obtained by the speech processing unit, the position information obtained by the position verification unit, the image information obtained by the image processing unit and the additional information inputted by the additional information input unit, to said information processing device capable of mutually relating and storing them in the database; it twelfthly provides a mobile information terminal which provides information registered in a database, from an information processing device to a mobile information terminal having made a request for information provision, comprising a speech input unit capable of inputting speech relevant to requested information as a search key during an information provision request mode; a speech processing unit capable of acquiring speech information based on the speech inputted by the speech input unit; a position verification unit capable of acquiring position information of said mobile information terminal as a search key during the information provision request mode; an image capture unit capable of capturing an image as a search key during the information provision request mode; an image processing unit capable of acquiring image information based on the image captured by the image capture unit; a transmitter unit capable of transmitting to said information processing device, the speech information obtained by the speech processing unit, the position information obtained by the position verification unit and the image information obtained by the image processing unit; and a receiver unit capable of receiving as the requested information, additional information relevant to the speech information, the position information and the image information as has been retrieved and sent from the database having speech information, position information, image information and additional information mutually related and prestored therein by said information processing device; it thirteenthly provides a mobile information terminal characterized in that the speech information is information which contains a phoneme string of the speech, and it fourteenthly provides a mobile information terminal characterized in that the image information is features of the image.

Still further, in order to accomplish the object, the invention fifteenthly provides an information processing device which registers information provided from a mobile information terminal in a database, comprising a receiver unit capable of receiving, from said mobile information terminal, speech information based on speech inputted by said mobile information terminal, a position information of said mobile information terminal, and additional information relevant to the speech information and the position information inputted by said mobile information termina; and an information processing unit capable of mutually relating and storing the speech information, the position information and the additional information received by the receiver unit, in the database; it sixteenthly provides an information processing device which provides information registered in a database, to a mobile information terminal having made a request for information provision, comprising a receiver unit capable of receiving, from said mobile information terminal, speech information based on speech inputted by said mobile information terminal, and a position information of said mobile information terminal; an information processing unit capable of retrieving additional information relevant to the speech information and the position information received by the receiver unit, from the database having speech information, position information and additional information mutually related and prestored as registration information therein; and a transmitter unit capable of transmitting the additional information retrieved by the information processing unit, to said mobile information terminal; it seventeenthly provides an information processing device which registers information provided from a mobile information terminal, in a database, comprising a receiver unit capable of receiving, from said mobile information terminal, speech information based on speech inputted by said mobile information terminal, a position information of said mobile information terminal, image information based on an image captured by said mobile information terminal, and additional information relevant to the speech information, the position information and the image information inputted by said mobile information terminal; and an information processing unit capable of mutually relating and storing the speech information, the position information, the image information and the additional information received by the receiver unit, in the database; it eighteenthly provides an information processing device which provides information registered in a database, to a mobile information terminal having made a request for information provision, comprising a receiver unit capable of receiving, from said mobile information terminal, speech information based on speech inputted by said mobile information terminal, a position information of said mobile information terminal, and image information based on an image captured by said mobile information terminal; an information processing unit capable of retrieving additional information relevant to the speech information, the position information and the image information received by the receiver unit, from the database having speech information, position information, image information and additional information mutually related and prestored therein; and a transmitter unit capable of transmitting the additional information retrieved by the information processing unit, to said mobile information terminal; it ninteenthly provides an information processing device characterized in that the speech information is information which contains a phoneme string of the speech; and it twentiethly provides an information processing device characterized in that the image information is features of the image.

### Brief Description of Drawings

Fig. 1 is a diagram showing the flow of the database registration in the present invention.
Fig. 2 is a diagram showing the flow of the database search in the invention.
Fig. 3 is a functional block diagram showing an embodiment of a mobile information terminal (terminal station) in the invention.
Fig. 4(A) is a functional block diagram showing an embodiment of an information processing device (base station) in the invention, while Fig. 4(B) is a system configuration diagram showing an embodiment of an information providing system in the invention.
Fig. 5 is a more practicable flow chart of a process for the database registration in the invention.
Fig. 6 is a diagram showing data structure examples of a database in the invention.
Fig. 7 is a more practicable flow chart of a process for the database search in the invention.

Reference numerals and letters in the drawings designate the following:
- A, A': Mobile information terminals (Terminal stations)
- 10: Antenna
- 11: Control unit
- 15: Input unit
- 15a: Character input unit
- 15b: Speech input unit
- 17: Display unit
- 21: Processing unit
- 21a: Speech feature extraction unit
- 21b: Phoneme string generation unit
- 21c: Image feature extraction unit
- 23: Communication control unit
- 25: Image capture unit
- 27: Position verification unit
- 31: Information synthesis unit
- 33: Storage unit
- B, B': Information processing devices (Base stations)
- 40: Antenna
- 41: Communication control unit
- 45: Information processing device
- 47: Information processing unit
- 51: Storage unit
- 53: Speech information storage area
- 55: Position information storage area
- 57: Image information storage area
- 61: Additional information storage area
- C: Network
- DB, DB': Databases

### Best Mode for Carrying Out the Invention

Considerations made by the inventors of the present invention will be first explained before the description of embodiments of the invention.

In view of a situation where many peculiar proper nouns are used especially for place names, etc. and where a conversion efficiency and a conversion accuracy in the case of inputting voice and converting the voice into a word are inferior and a situation where characters are difficult to be inputted by keys in a mobile information terminal, the inventors have considered that the efficient information input can be realized by entering city information with a symbol string such as speech feature or phoneme feature closer to a speech waveform, that is, a "phoneme string", employed as speech information, rather than by performing speech recognition of word-level susceptible to misrecognition.

A "phoneme" signifies a vowel or consonant which is an element constituting speech, and "phonemic segments" or "continuous phonemic segments" may well be considered as the phoneme here. The "phonemic segments" are elements into which one phoneme has been subdivided. The "continuous phonemic segments" are information which indicates the continuous state of the phonemic segments, for example, information which indicates how the elements are connected by taking into account the change of the phonemic segments that have been obtained by dividing "A"(Japanese vowel) into its initial end, its middle phase and its terminal end. And, the "phoneme string" signifies a string in which the phonemes are in a row.

Such a "phoneme string" is employed as speech information, and this speech information is provided to an information processing device which manages the information registration to a database, the information retrieval from the database and such, where the speech information is associated with position information of the position, the direction or the like of a mobile information terminal at the time when the speech was uttered or with the image information of the neighborhood photographed by an image capture device belonging to the mobile information terminal, a separate image capture device capable of providing data to the mobile information terminal, or the like. Thus, the information registration and the information retrieval can be realized easily and accurately. Incidentally, on this occasion, the city information to be registered and to be retrieved is statistically converged, whereby the efficient registration of the city information and a service concerning the browsing of the registered contents can be provided.

Here, the information processing device is constructed of a device capable of registering and retrieving the information, which has, for example, a main memory unit, a secondary storage unit, a processing unit and a communication unit. As such device, a personal computer, a large-scale computer or the like can be considered. Further, it is more preferable that the device is capable of analyzing the information with the use of a program which statistically analyzes the information stored in the database.

As the mobile information terminal, an information terminal of so-called "portable type" such as, for example, a cellular phone, a PDA (Personal Digital Assistant), a notebook type computer, a wearable computer, a wrist watch type computer and an on-vehicle type computer. Here, the methods for moving, equiping, holding, etc. and further the aspects and shapes and such are not especially restricted.

Between the information processing device and the mobile information terminal, it is constructed as being capable of exchanging or retrieving the information each other by a communication network such as the Internet or intranet, via wireless LAN, cellular phone or the like.

The database may be built in the information processing device or may well be separate from the information processing device. Here, the separate-type database is constructed so as to be able to bi-directionally communicate with the information processing device by any wireless or wired means.

On the basis of the above considerations, information providing technology according to embodiments of the invention will now be described with reference to the drawings.

### <<DESCRIPTION OF PRINCIPLES OF REGISTRATION AND RETRIEVAL PROCESSES>>

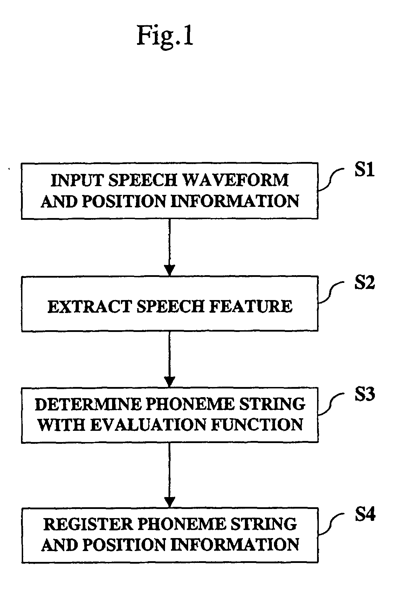

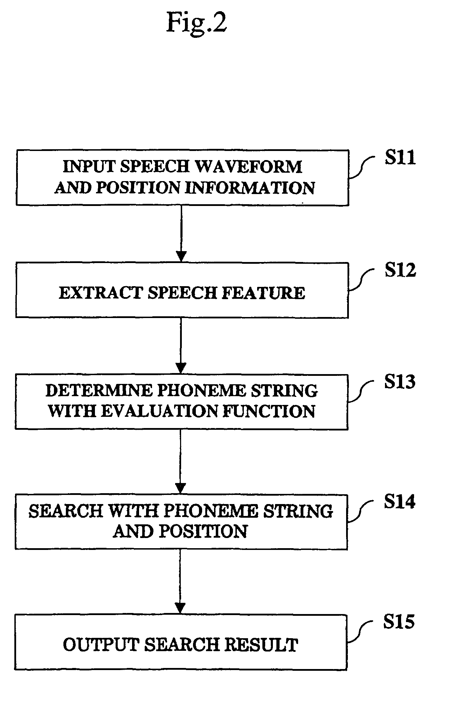

First, the principles of the data registration and data retrieval of the database in the information providing technology according to the embodiments will be briefly described with reference to Fig. 1 and Fig. 2.

### <Flow of Principle of Registration Process>

As shown in Fig. 1, first of all, at a step S1, speech waveform and position information are inputted. At a step S2, speech features are extracted. At a step S3, phoneme string determination is performed by using evaluation function. Subsequently, at a step S4, the phoneme string and the position information are registered in the database, associating with each other.

### <Flow of Principle of Retrieval Process>

As shown in Fig. 2, first of all, at a step S11, speech waveform and position information are inputted. At a step S12, speech features are extracted. At a step S13, phoneme string determination is performed by using evaluation function. Subsequently, at a step S14, data in the database is retrieved on the basis of the phoneme string and the position information. At a step S15, a retrieval result is outputted.

### <<DESCRIPTION OF MOBILE INFORMATION TERMINAL, INFORMATION PROCESSING DEVICE, DATABASE AND SYSTEM>>

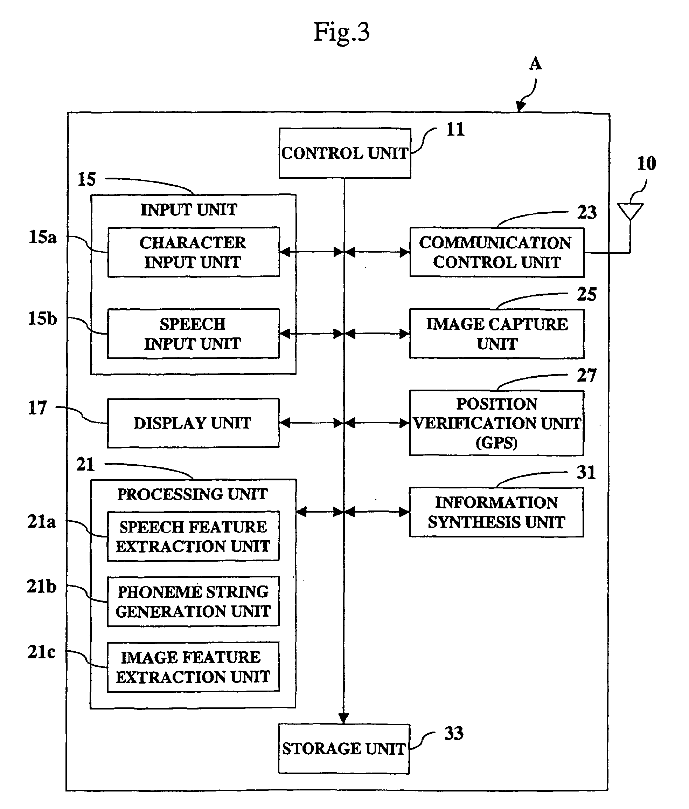

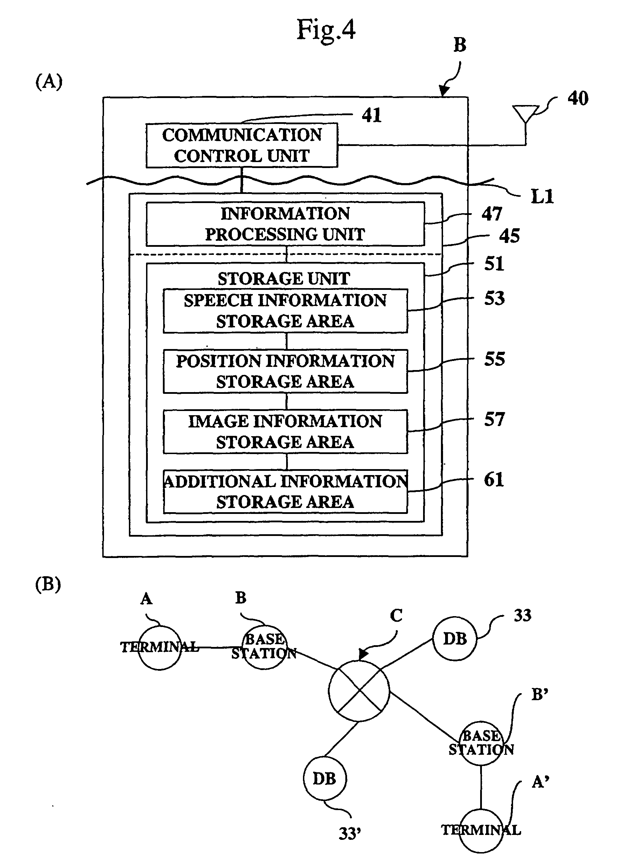

Now, more practicable examples of the mobile information terminal, theinformation processing device and the database which are used in the registration process and retrieval process and also the system which is constituted by them will be described with reference to the drawings. Fig. 3 is a functional block diagram showing an arrangement example of the mobile information terminal (terminal station). Fig. 4(A) is a functional block diagram showing an arrangement example of the information processing device (base station), while Fig. 4(B) is a schematic diagram showing an arrangement example of the whole system.

### <Mobile Information Terminal>

As shown in Fig. 3, the mobile information terminal A onthe user side has an antenna 10, a control unit 11 capable of controlling the whole terminal A, an input unit 15 capable of inputting data, a display unit 17 capable of displaying data, etc. by using, for example, LCD and such, a processing unit 21 capable of executing various operations, a communication control unit 23 capable of controlling the communications between the terminal and another equipment, an image capture unit 25 capable of acquiring image data, etc., a position (including direction) verification unit 27 inluding a GPS and such, an information synthesis unit 31 capable of synthesizing various information, and a storage unit 33 capable of storing data.

The input unit 15 has a character input unit 15a and a speech input unit 15b. The processing unit 21 has a speech feature extraction unit 21a, a phoneme string generation unit 21b and an image feature extraction unit 21c.

The speech feature extraction unit 21a extracts a feature from the speech waveform of the speech inputted from the speech input unit 15a and expresses the feature with numerical values for example, thereby to form a speech feature. The phoneme string generation unit 21b generates a phoneme string being the string of phonemes, on the basis of the speech inputted from the speech input unit 15a. The image feature extraction unit 21c forms a feature of the image (such as a tendency obtained from a certain image) on the basis of the image captured by the image capture unit 25.

### <Information Processing Device>

As shown in Fig. 4(A), the information processing device B such as a server on the service provider side is constructed including an antenna 40, a communication control unit 41, an information processing unit 47, and a storage unit 51.

The storage unit has a speech information storage area 53 for storing information on speech, a position information storage area 55 for storing information on positions and directions, an image information storage area 57 for storing information on images captured, and an additional information storage area 61 for storing additional information relevant to these informations mentioned above.

Incidentally, Fig. 4(A) exemplifies an arrangement in which the communication control unit 41 and the information processing device 45 are made unitary in the information processing device B, but the unit 41 and the device 45 may well be separate as expressed by sign L1.

### <Database>

The database as to which data registration, accumulation and retrieval are performed through the mobile information terminal A and the information processing device B may be constructed in the storage unit 33 within the mobile information terminal A shown in Fig. 3, for example. On the other hand, it may well be built in the storage unit 51 within the information processing device B shown in Fig. 4(A), from the viewpoint that the information are provided or requested by a large number of users.

### <System>

Fig. 4(B) shows a system configuration example in which databases DB, DB' are separate from the mobile information terminals A, A' being terminal stations and from the information processing devices B, B' being base stations. Here, the pair of the mobile information terminal (terminal station) A - the information processing device (base station) B and the pair of the mobile information terminal (terminal station) A' - the information processing device (base station) B' are respectively associated with a network C. Further, the databases DB, DB' are associated with the information processing devices (base stations) B, B' through the network C. Of course, the system may well have any of various other connection embodiments.

### <<CONCRETE DESCRIPTION OF REGISGTRATION AND RETRIEVAL PROCESSES>>

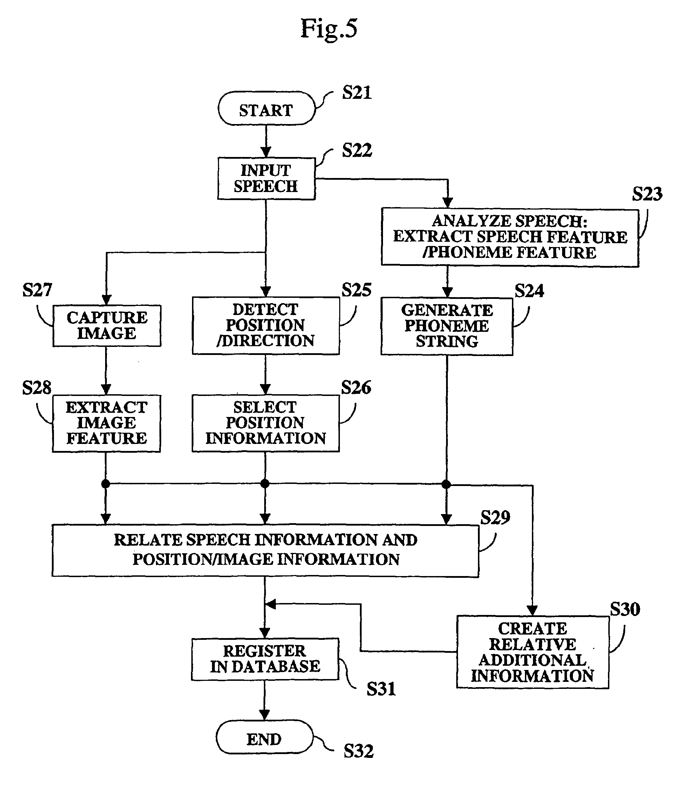

Next, the process flow and the data structure examples of the database in the information providing system as one embodiments of the invention will be described with reference to Figs. 5 through 7. Also Figs. 3 and 4 will be referred to occasionally.

### <Practicable Flow of Registration Process>

Fig. 5 is a practicable flowchart showing the process flow for registering information in the database. Incidentally, the registration process can also be called "database creation process".

First, at a step S21, the database registration process is started. At a step S22, speech from the user of the mobile information terminal A is inputted by the speech input unit 15b of the input unit 15 in the mobile information terminal A. At a step S23, the inputted speech is analyzed by the speech feature extraction unit 21a of the processing unit 21, thereby to extract speech features or phoneme features. At a step S24, a phoneme string is generated from the extracted speech features or phoneme features by the phoneme string generation unit 21b of the processing unit 21.

Further, at a step S25, in accordance with the speech input, the position of the mobile information terminal A is verified using a GPS or the like by the position verification unit 27 (position/direction detection step). The position information contains the information such as a position specified with a latitude and longitude, a unique position identified by an address, etc. and a relative position as to whether or not an object exists in which direction with respect to the position reference of a certain specified building, etc.. At a step S26, necessary position information is selected and specified from among the above information.

Further, at a step S27, an image is captured by the image capture unit 25 in accordance with the speech input. At a step S28, an image feature is extracted from the captured image by the image feature extraction unit 21c of the processing unit 21.

And, at a step S29, the phoneme string, the selected position information and the image feature are associated by the information synthesis unit 31. In addition, relevant additional information which is relevant to the phoneme string, the selected position information and the image feature is created as indicated at a step S30. At a step S31, the phoneme string, the selected position information, the image feature and the relevant additional information are registered in the database in a state where they are associated with one another. At a step S32, the process for the registration in the database is ended.

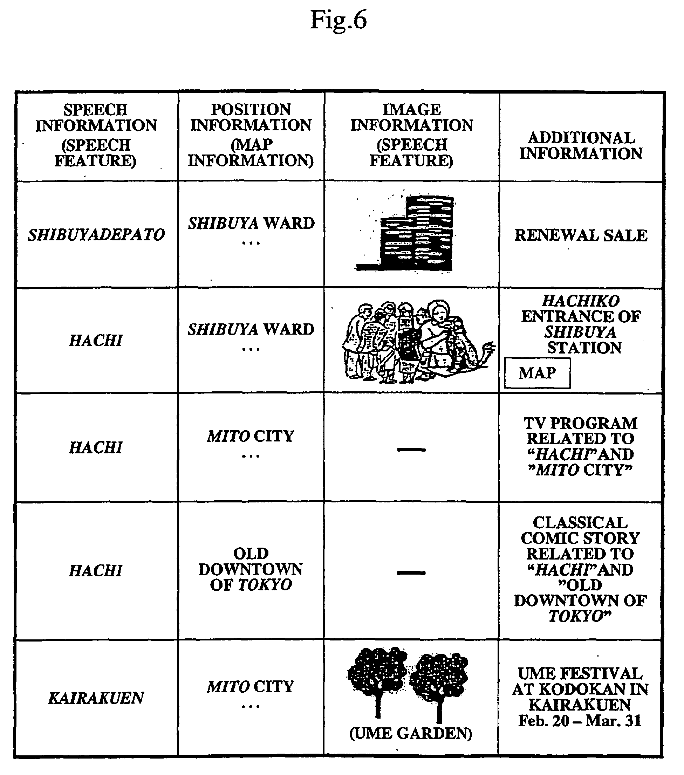

Structural examples of data registered in the database are shown in Fig. 6. The speech information, position information, image information and additional information are arranged in association. By the way, in the examples shown in Fig. 6, each speech information is indicated by reading in *katakana* (the square form of the Japanese syllabary characters *kana*) for the sake of convenience, but they are actually stored as phoneme strings by using the alphabet, phonetic symbols, or the like.

The data structure of the first line indicates a case where the speech information is "*Shibuya Department Store*" (in actuality, an existent appellation is used), the position information is Shibuya Ward... and the image information (feature) is the image of the Shibuya Department Store. As the additional information, the information regarding the renewal sale at the Shibuya Department Store is listed, for example.

The data structure of the second line indicates a case where the speech information is "*Hachi*"*,* where the position information is *Shibuya* Ward... and the image information (feature) is the image of the Faithful Dog *Hachiko.* As the additional information, the map information of the *Hachiko* Entrance of the *Shibuya* Station.

The data structure of the fifth line indicates a case where the speech information is "*Kairakuen*"*,* the position information is *Mito* City... and the image information (feature) is the image of *ume* (Japanese apricot tree) garden". As the additional information, the information regarding the opening period of *Ume* Festival held at *Ko*⁻*do*⁻*kan* in *Mito Kairakuen.*

As described above, the database in which the data relevant to one another are associated can be constructed on the basis of the speech information, the position information and the image information.

Incidentally, data at the third and fourth lines will be explained later.

The above processing will now be described more concretely.

For example, at *Shibuya* (a town in Japan), names regarding the objects caught by cameras and the images and scenes in the lines of sight and such are spoken in the situation where a plurality of persons, each carrying a wearable computer equipped with a camera (image capture unit), a GPS (position verification units), etc., walks around and a plurality of wearable computers, each equipped with a camera, GPU, etc. and mounted on a wheeled chair, bicycle, etc., moves around and further in the situation where a plurality of radio controlled devices are operated and the monitoring of nearby surroundings is performed while a robot cruises around.

For example, "*Ha Chi*" or "*Ha Chi Ko*" is pronounced according to the bronze statue of *Hachhiko* or "Shibuya Department Store" is pronounced in front of the department store. Then, basing on these speeches, speech feature parameters, phonemic symbols, phonetic symbols, phonemic segment symbols, etc. which are in time series and the position information of the mobile information terminal A are mutually related and registered in the database. On this occasion, image features which have been obtained by the image feature extraction unit 21c on the basis of images captured by the image capture unit 25 and such may well be mutually related and stored in the database.

Subsequently, the above information is analyzed on the basis of positions and the symbol strings are statistically converged. A processing method in the convergence can be easily constructed by known statistical techniques. For example, a method of calculating Euclidean distance based on means and variances, a similarity evaluation based on the Bayes formula, a distance evaluation of VQ (Vector Quantity) codes after the VQ coding based on the k-means clustering, or the like. As a result, symbol strings converted from the speeches regarding the events seen at a certain position are statistically evaluated and then the symbol strings converted from the speeches frequently spoken at the certain postion are classified and stored on the basis of the positions or directions. Accordingly, the information can be databased in detail.

In creating the database, the image features may be directly related and stored by image processing techniques, or the characters of a signboard, etc. may well be recognized and employed as the information of labeling and the recognized character string may expanded into phoneme strings, which are made utilizable in the information providing system of the invention. Further, when the speech is expanded into phonemes and then registered in the database at the time of the information collection, there are some possibilities that several ways of reading (pronouncing) the Japanese written expressions such as "*Shi Bu Ya Hya Kka Ten*" and "*Shi Bu Ya De Pa- To*" for the expression "*shibuyahyakkaten*" might be inputted. Thus, considering these possibilities, the seeches of a plurality of users can be stored in the database It is also possible to execute the processing in consideration of collateral information such as the ages, genders or birthplaces of the speakers. Data may well be statistically converged so as to absorb erroneous readings, changes ascribable to dialects, the peculiar ways of speaking, the differences of languages, etc. by executing a process in which pronounced phonemic series having higher frequency in appearance is statistically deduced and then registered in the database. In these analyses, a more efficient analysis and search can be realized by adding the information of intonation or accent. Additionally, a still more efficient analysis and search can be realized by adding a learning function to the mobile information terminals A and B.

The creation of the database by the processing as stated above corresponds also to collecting regional information while speech labels are being given to map information and ambient image features. By analyzing the collected information with the above statistical techniques based on the positions, the database of names and relevant terms of buildings etc. which come into user's sight during a walk through a certain region can be constructed. On this occasion, the collected information can be related to various information based on not only the phoneme strings, but also word character strings, speech waveform features, speech VQ codes, etc. Alternatively, by appropriately combining the above elements, the accuracy of correspondence with the associated information can be enhanced for the labeling.

Furthermore, in a case where a content concerning a position is to be labeled by inputting a word with a keyboard, input keys and such while watching an image, the word may well be expanded into time-series data formed of the symbols of phonemes, phoneme segments or the likes, so as to employ the time-series data as a search label.

According to the database thus constructed, it is unnecessary to execute a process in which speeches are converted into text labels containing words and *kanjis* (Chinese characters used in Japanese writing) by speech recognition. More specifically, since the phoneme strings are continuously outputted, it is permitted to evaluate and search for the phoneme strings one another by a technique such as DP matching or HMM (Hidden Markov Model), and appropriate information at the current position can be retrieved without identifying an accurate word.

Of course, a method is also suggested in which the similarities between phonemes are put together as a table for distance evaluations beforehand, thereby to enhance the efficiency of matching evaluations in DP (Dynamic Programming) matching. Further, the database may well be constructed in such a way that several meaning or shape information items are given to a single name by adding a plurality of meaning tags or image features to a single phoneme string, or that a plurality of phoneme strings are related to a single meaning tag or shape information. Thus, a semantic search can also be realized using a method in which events relevant to an identical phoneme string tag are converged as homonyms or different names for an identical shape, or in which phoneme strings relevant to the name of an identical shape or to an identical tag are set as synonyms, or in which a meaning tag itself is formed of a phoneme string.

Further, in a case where an image feature having a phoneme string different from that of an image feature of high similarity is handled as a synonym, the database may well be constructed so that a meaning can be shared between different languages in consideration of the appearance rate, transition probability, etc. of phonemes attributed to the different languages. Furthermore, a method is also possible in which images are evaluated as the difference of shapes based on the directions of the lines of sight, from similar phonemic label series for different image features.

In the use of the database, a search for commerce-based objects such as stores can be made more efficiently in such a way that stores are previously classified by finer items such as the sorts of the stores, the open hours thereof, the genres thereof, and the list of stores in a large-sized store. It is also allowed to simultaneously employ information on the Internet, or to share information via the Internet. Further, it is possible to employ not only a terminal of portable or attachment type, such as cellular phone, wearable computer or car navigation system, but also a device or robot having an information processing function, such as pet robot or agent robot.

### <Practicable Flow of Retrieval Process>

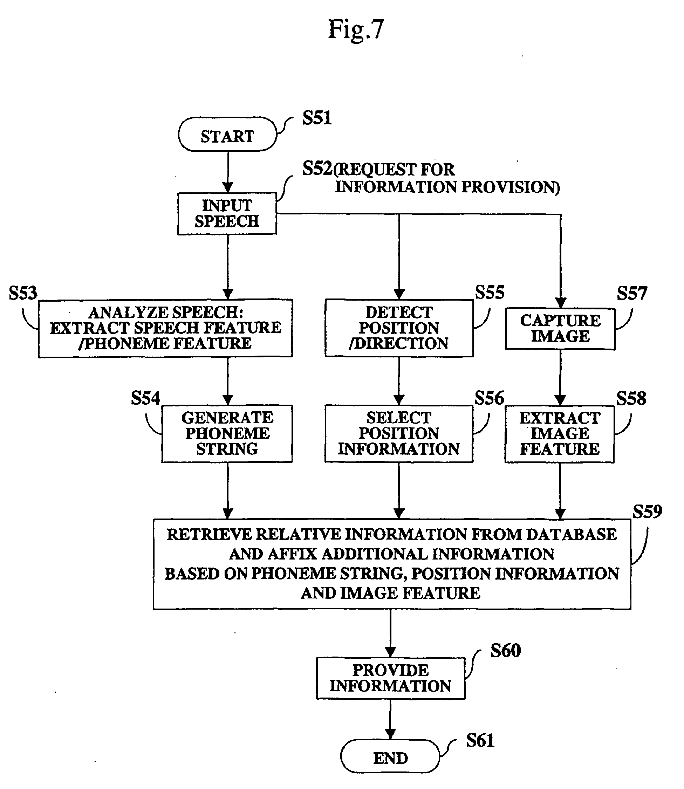

Next, the process in which relevant information is retrieved from a database based on speech and with information as a key will be described with reference to Fig. 7.

First, at a step S51, the retrieval process is started. At a step S52, a user of the mobile information terminal A, who makes a request for information provision, inputs speech relevant to the information he or she requests by the speech input unit 15b of the input unit 15 in the mobile information terminal A. At a step S53, the speech analysis of the inputted speech is made by the speech feature extraction unit 21a of the processing unit 21 so as to extract speech features or phoneme features. At a step S54, a phoneme string is generated on the basis of the extracted speech features or phoneme features by the phoneme string generation unit 21b of the processing unit 21.

Simultaneously with the above processing concerning the speech, at a step S55, the position of the mobile information terminal A is detected by the position verification unit 27 in accordance with the speech input. At a step S56, necessary position information is selected and specified. In addition, at a step S57, an ambient environment is captured by the image capture unit 25 in accordance with the speech input, and at a step S28, image features are extracted from the captured image by the image feature extraction unit 21 c of the processing unit 21.

On the basis of the information items obtained at the above steps and in accordance with an identical speech input, at a step S59, the information processing device B searches for the relevant information from the database, affixes additional information thereto and sends the resulting information to the mobile information terminal A.

These relevant information items are displayed on, for example, the display unit 17 of the mobile information terminal A. Then, the user can act with reference to the information displayed on the display unit 17.

A service which presents the above search result to the user may well, for example, display a graphical map or a route moving image, present a route to a designated store, or indicate directions at important positions with voices. Further, an effective and efficient information support can be implemented by making an artifice in which a person who works for a store or the customer of the store adds information such as an advertisement or evaluation, or in which information items are changed-over between those for meals in the daytime and those for saloons in the nighttime in accordance with the time zones of use.

Furthermore, as an integrated applicative example concerning the above service, the user is permitted to go to the movie of "*Faithful Dog Hachiko*" in such a way that he/she has been specified to be in front of "*Hachiko* Statue" at *Shibuya* Station on the basis of his/her position information via any of various techniques such as GPS and thereafter he/she makes a multiple condition search employing keywords such as "*Hachi*" and "Video". Also, it is possible to search for only scenes where the word of "*Ha Chi*" comes out in conversation within a movie or pictures with "*Ha Chi Ko*".

Incidentally, referring to Fig. 6 again, even when the identical speech information of "*Hachi*" has been inputted, search results in the cases where the verified or specified positions are, for example, within the limits of *Mito* City and in the vicinity of the traditional shopping and entertainment districts of *Edo* can become different.

For example, in a case where the position information has been specified as *Mito* City, the information of a popular television program which has a character relevant to *"Hachi"* and which is relevant to "*Mito* City" may well be preferentially added. Also, in a case where the position information indicates old downtown of Tokyo, information relevant to a classical comic story about that person of a tenement house of the poor in the "old downtown of Tokyo" who is relevant to "*Hachi*" is presented.

In this manner, since the cases of the same sound are confusing, the position information is also considered, whereby the accuracy of recognition can be enhanced.

As exemplified by *Mito Kairakuen* mentioned above, it is also possible to present guidance on noted places in various districts and information relevant to the noted places, and the information providing system can also be employed as a guidebook for travelers. Further, the information providing system will be applicable to the guide of a disabled person, etc.

On this occasion, a more efficient search condition may well be set in such a way that the relation of a plurality of words is subjected to grammatical regulations or a syntactic analysis by employing prior-art speech recognition techniques.

Incidentally, regarding a method for detecting a position or direction, the position may well be detected just as in a car navigation system by combining a GPS, a velocity sensor, a geomagnetic sensor or the likes, or it may well be detected on the basis of a received ID by setting tags or the likes for transmitting IDs indicative of positions, in individual places.

Of course, the information items to be labeled are not limited to stores, signboards, timetables, guide maps, and monuments and the city information items lying deep in regions, but they may well be, for example, natural information items in the suburbs, such as growing trees or flowers, animals or insects. For example, in a case where the speech information is "*O Ze*"(a place in Japan), while the position information indicates a direction toward *Oze,* relevant information such as a spot worthy of note for the flowers of a skunk cabbage at *Oze* may well be provided. Further, in case of employing the natural information for the search, a technique as stated below is suggested.

First, conditions are set based on the frequency distribution, color or luminosity, and chroma saturation of a shape or contour which changes depending upon natural situations such as season, weather and time zone, and also image information, acoustic information such as noise or ambient sound, and the changes of natural concrete situations, such as the changes of wind force, atmospheric temperature, rainfall and geomagnetism. And then, an inputted ambient scene is classified into data. Subsequently, the statistical deviation of features is analyzed using feature information concerning an image or region.

In addition, this evaluation result can be used for labeling concerning the natural information for the registered information, or it can be used for the revision or correction of transmission contents for the user, considering the situation changes of weather in the search. Also, the user himself/herself can employ the result as a search key, or the system can utilize the result as a search key which is automatically inserted. Of course, significance tags based on IDs or phoneme strings may well be constructed on the basis of speeches which represent the information items, or the speeches may well be employed for constructing a phoneme database for investigating and researching into their speech features.

In order to construct such a database, a person who inputs the labels may well be established as a professional person called "indexer" or "labeler". Further, in performing the job as a profession, a labeler who inputs lies, mistakes or false information may possibly pose a problem as to the payment of wages. The problem, however, can be solved by statistically evaluating the reliabilities of the contents of utterances and registrations by individual labelers, through the similarities of specified appellations, weather conditions or the like objective information items in, for example, an identical region, to those by other labelers, the information of evaluations for the labeling information by data users, the dispatch of reliable staff members from the side of the database construction, and the registered situation of objective information based on a map already registered.

Besides, the information inputting job can be performed while moving. Herein, if the names and situations of objects in the surroundings can be spoken, a person can input information items relevant to a region, more efficiently than in case of inputting the information with a keyboard while he/she is watching a document such as past map, or signboards in the actual place. Therefore, it is also possible to provide a labor environment which is not affected by ages and differences in ability, including education and experience, and the database can be realized by the working power of a worker who has been unemployed for a long term, or a retired person. In addition, a wage system for labelers can adopt an auction-like method in which service efficiencies are rated on the basis of the above credibilities, and such information users' evaluations that a labeler inputs information items which are not noticed by other labelers, and that a labeler inputs information items which are often utilized. Besides, in a case where any information is not registered on the side of a database or where a group of exact object feature information items cannot be specified in the evaluation of a similarity or likelihood within the database, a labeler may well provide information for new labeling, in compliance with a request from the database side. Of course, in order to obtain the information of an image, speech, position or the like, a search can also be made by mutually combining the various features of optical information, a picture, an acoustic image, a shape, a color, a sound and the likes, or by performing weighting based on statistical relevancies.

Of course, the present invention is not restricted to the foregoing embodiments, but various aspects are possible as to details.

### Industrial Applicability

As described above in detail, according to the present invention, there are provided a novel information providing system capable to make the database registration and database search of various information including city information easy and highly-accurate for anybody, and a mobile information terminal and an information processing device which are used for the information providing system. Thus, the city database can be constructed by relating the laborious labeling job to the speech and position information, and enhancement in the convenience of livelihood can also be attained by realizing information support for inhabitants.

## Claims

1. An information providing system in which information to be registered in a database is provided from a mobile information terminal to an information processing device, **characterized in that**:
said mobile information terminal comprising:
a speech input unit capable of inputting speech as registration information during an information registration mode;
a speech processing unit capable of acquiring speech information based on the speech inputted by said speech input unit;
a position verification unit capable of acquiring position information of said mobile information terminal as registration information during the information registration mode;
an additional information input unit capable of inputting additional information relevant to the speech information and the position information as registration information during the information registration mode; and
a transmitter unit capable of transmitting, to said information processing device, the speech information obtained by said speech processing unit, the position information obtained by said position verification unit and the additional information inputted by said additional information input unit; and
said information processing device comprising:
a receiver unit capable of receiving the speech information, the position information and the additional information sent from said mobile information terminal; and
an information processing unit capable of mutually relating and storing the speech information, the position information and the additional information received by said receiver unit, in the database.

2. An information providing system in which information registered in a database is provided from an information processing device to a mobile information terminal having made a request for information provision, **characterized in that**:
said mobile information terminal comprising:
a speech input unit capable of inputting speech relevant to requested information as a search key during an information provision request mode;
a speech processing unit capable of acquiring speech information based on the speech inputted by said speech input unit;
a position verification unit capable of acquiring position information of said mobile information terminal as a search key during the information provision request mode;
a transmitter unit capable of transmitting to said information processing device, the speech information obtained by said speech processing unit and the position information obtained by said position verification unit; and
a receiver unit capable of receiving additional information sent from said information processing device, as the requested information; and
said information processing device comprising:
a receiver unit capable of receiving the speech information and the position information sent from said mobile information terminal;
an information processing unit capable of retrieving the additional information relevant to the speech information and the position information received by said receiver unit, from the database having speech information, position information and additional information mutually related and prestored therein; and
a transmitter unit capable of transmitting the additional information retrieved by said information processing unit, to said mobile information terminal.

3. An information providing system in which information to be registered in a database is provided from a mobile information terminal to an information processing device and information registered in the database is provided from said information processing device to a mobile information terminal having made a request for information provision, **characterized in that**:
said mobile information terminal comprising:
a speech input unit capable of inputting speech as registration information during an information registration mode, and capable of inputting speech relevant to requested information as a search key during an information provision request mode;
a speech processing unit capable of acquiring speech information based on the speech inputted by said speech input unit during the information registration mode, and capable of acquiring speech information based on the speech inputted by said speech input unit during the information provision request mode;
a position verification unit capable of acquiring position information of said mobile information terminal as registration information during the information registration mode, and capable of acquiring position information of said mobile information terminal as a search key during the information provision request mode;
an additional information input unit capable of inputting additional information relevant to the speech information and the position information as registration information during the information registration mode;
a transmitter unit capable of transmitting the speech information obtained by said speech processing unit, the position information obtained by said position verification unit and the additional information inputted by said additional information input unit, to said information processing device during the information registration mode, and capable of transmitting the speech information obtained by said speech processing unit and the position information obtained by said position verification unit, to said information processing device during the information provision request mode; and
a receiver unit capable of receiving additional information sent from said information processing device, as the requested information; and
said information processing device comprising:
a receiver unit capable of receiving the speech information, the position information and the additional information sent from said mobile information terminal during the information registration mode, and capable of receiving the speech information and the position information sent from said mobile information terminal during the information provision request mode;
an information processing unit capable of mutually relating and storing the speech information, the position information and the additional information received by said receiver unit, in the database, during the information registration mode and also capable of retrieving the additional information relevant to the speech information and the position information received by said receiver unit, from the database, during the information provision request mode; and
a transmitter unit capable of transmitting the additional information retrieved by said information processing unit, to said mobile information terminal.

4. An information providing system in which information to be registered in a database is provided from a mobile information terminal to an information processing device, **characterized in that**:
said mobile information terminal comprising:
a speech input unit capable of inputting speech as registration information during an information registration mode;
a speech processing unit capable of acquiring speech information based on the speech inputted by said speech input unit;
a position verification unit capable of acquiring position information of said mobile information terminal as registration information during the information registration mode;
an image capture unit capable of capturing an image as registration information during the information registration mode;
an image processing unit capable of acquiring image information based on the image captured by said image capture unit;
an additional information input unit capable of inputting additional information relevant to the speech information, the position information and the image information as registration information during the information registration mode; and
a transmitter unit capable of transmitting to said information processing device, the speech information obtained by said speech processing unit, the position information obtained by said position verification unit, the image information obtained by said image processing unit and the additional information inputted by said additional information input unit; and
said information processing device comprising:
a receiver unit capable of receiving the speech information, the position information, the image information and the additional information sent from said mobile information terminal; and
an information processing unit capable of mutually relating and storing the speech information, the position information, and the image information and the additional information received by said receiver unit, in the database.

5. An information providing system in which information registered in a database is provided from an information providing device to a mobile information terminal having made a request for information provision, **characterized in that**:
said mobile information terminal comprising:
a speech input unit capable of inputting speech relevant to requested information as a search key during an information provision request mode;
a speech processing unit capable of acquiring speech information based on the speech inputted by said speech input unit;
a position verification unit capable of acquiring position information of said mobile information terminal as a search key during the information provision request mode;
an image capture unit capable of capturing an image as a search key during the information provision request mode;
an image processing unit capable of acquiring image information based on the image captured by said image capture unit;
a transmitter unit capable of transmitting to said information processing device, the speech information obtained by said speech processing unit, the position information obtained by said position verification unit and the image information obtained by said image processing unit; and
a receiver unit capable of receiving additional information sent from said information processing device, as the requested information; and
said information processing device comprising:
a receiver unit capable of receiving the speech information, the position information and the image information sent from said mobile information terminal;
an information processing unit capable of retrieving the additional information relevant to the speech information, the position information and the image information received by the receiver unit, from the database having speech information, position information, image information and additional information mutually related and prestored therein;
a transmitter unit capable of transmitting the additional information retrieved by said information processing unit, to said mobile information terminal.

6. An information providing system in which information to be registered in a database is provided from a mobile information terminal to an information processing device and information registered in the database is provided from said information processing device to a mobile information terminal having made a request for information provision, **characterized in that**:
said mobile information terminal comprising:
a speech input unit capable of inputting speech as registration information during an information registration mode, and capable of inputting speech relevant to requested information as a search key during an information provision request mode;
a speech processing unit capable of acquiring speech information based on the speech inputted by said speech input unit during the information registration mode, and capable of acquiring speech information based on the speech inputted by said speech input unit during the information provision request mode;
a position verification unit capable of acquiring position information of said mobile information terminal as registration information during the information registration mode, and capable of acquiring position information of said mobile information terminal as a search key during the information provision request mode;
an image capture unit capable of capturing an image as registration information during the information registration mode, and capable of capturing an image as a search key during the information provision request mode;
an image processing unit capable of acquiring image information based on the image captured by said image capture unit during the information registration mode, and capable of acquiring image information based on the image captured by said image capture unit during the information provision request mode;
an additional information input unit capable of inputting additional information relevant to the speech information, the position information and the image information as registration information during the information registration mode;
a transmitter unit capable of transmitting the speech information obtained by said speech processing unit, the position information obtained by said position verification unit, the image information obtained by said image processing unit and the additional information inputted by said additional information input unit, to said information processing device during the information registration mode, and capable of transmitting the speech information obtained by said speech processing unit, the position information obtained by said position verification unit and the image information obtained by said image processing unit, to said information processing device during the information provision request mode; and
a receiver unit capable of receiving additional information sent from said information processing device, as the requested information; and
said information processing device comprising:
a receiver unit capable of receiving the speech information, the position information, the image information and the additional information sent from said mobile information terminal during the information registration mode, and capable of receiving the speech information, the position information and the image information sent from. said mobile information terminal during the information provision request mode;
an information processing unit capable of mutually relating and storing the speech information, the position information, the image information and the additional information received by said receiver unit, in the database, during the information registration mode, and capable of retrieving the additional information relevant to the speech information, the position information and the image information received by said receiver unit, from the database, during the information provision request mode; and
a transmitter unit capable of transmitting the additional information retrieved by said information processing unit, to said mobile information terminal.

7. An information providing system as in any one of claims 1 to 6, **characterized in that** said speech information is information which contains a phoneme string of said speech.

8. An information providing system as in any one of claims 4 to 6, **characterized in that** said image information is features of said image.

9. A mobile information terminal which provides information to be registered in a database, to an information processing device, comprising:
a speech input unit capable of inputting speech as registration information during an information registration mode;
a speech processing unit capable of acquiring speech information based on the speech inputted by said speech input unit;
a position verification unit capable of acquiring position information of said mobile information terminal as registration information during the information registration mode;
an additional information input unit capable of inputting additional information relevant to the speech information and the position information as registration information during the information registration mode; and
a transmitter unit capable of transmitting the speech information obtained by said speech processing unit, the position information obtained by said position verification unit and the additional information inputted by said additional information input unit, to said information processing device capable of mutually relating and storing them in the database.

10. A mobile information terminal to which information registered in a database is provided from an information processing device by making a request for information provision, comprising:
a speech input unit capable of inputting speech relevant to requested information as a search key during an information provision request mode;
a speech processing unit capable of acquiring speech information based on the speech inputted by said speech input unit;
a position verification unit capable of acquiring position information of said mobile information terminal as a search key during the information provision request mode;
a transmitter unit capable of transmitting to said information processing device, the speech information obtained by said speech processing unit and the position information obtained by said position verification unit; and
a receiver unit capable of receiving as the requested information, additional information relevant to the speech information and the position information retrieved and sent from the database having speech information, position information and additional information mutually related and prestored therein by said information processing device.

11. A mobile information terminal which provides information to be registered in a database, to an information processing device, comprising:
a speech input unit capable of inputting speech as registration information during an information registration mode;
a speech processing unit capable of acquiring speech information based on the speech inputted by said speech input unit;
a position verification unit capable of acquiring position information of said mobile information terminal as registration information during the information registration mode;
an image capture unit capable of capturing an image as registration information during the information registration mode;
an image processing unit capable of acquiring image information based on the image captured by said image capture unit;
an additional information input unit capable of inputting additional information relevant to the speech information, the position information and the image information as registration information during the information registration mode; and
a transmitter unit capable of transmitting the speech information obtained by said speech processing unit, the position information obtained by said position verification unit, the image information obtained by said image processing unit and the additional information inputted by said additional information input unit, to said information processing device capable of mutually relating and storing them in the database.

12. A mobile information terminal which provides information registered in a database, from an information processing device to a mobile information terminal having made a request for information provision, comprising:
a speech input unit capable of inputting speech relevant to requested information as a search key during an information provision request mode;
a speech processing unit capable of acquiring speech information based on the speech inputted by said speech input unit;
a position verification unit capable of acquiring position information of said mobile information terminal as a search key during the information provision request mode;
an image capture unit capable of capturing an image as a search key during the information provision request mode;
an image processing unit capable of acquiring image information based on the image captured by said image capture unit;
a transmitter unit capable of transmitting to said information processing device, the speech information obtained by said speech processing unit, the position information obtained by said position verification unit and the image information obtained by said image processing unit; and
a receiver unit capable of receiving as the requested information, additional information relevant to the speech information, the position information and the image information retrieved and sent from the database having speech information, position information, image information and additional information mutually related and prestored therein by said information processing device.

13. A mobile information terminal as in any one of claims 9 to 12, **characterized in that** said speech information is information which contains a phoneme string of said speech.

14. A mobile information terminal as in claim 11 or 12, **characterized in that** said image information is features of said image.

15. An information processing device which registers information provided from a mobile information terminal, in a database, comprising:
a receiver unit capable of receiving, from said mobile information terminal, speech information based on speech inputted by said mobile information terminal, a position information of said mobile information terminal, and additional information relevant to the speech information and the position information inputted by said mobile information terminal; and
an information processing unit capable of mutually relating and storing the speech information, the position information and the additional information received by said receiver unit, in the database.

16. An information processing device which provides information registered in a database, to a mobile information terminal having made a request for information provision, comprising:
a receiver unit capable of receiving, from said mobile information terminal, speech information based on speech inputted by said mobile information terminal and a position information of said mobile information terminal;
an information processing unit capable of retrieving additional information relevant to the speech information and the position information received by said receiver unit, from the database having speech information, position information and additional information mutually related and prestored as registration information therein; and
a transmitter unit capable of transmitting the additional information retrieved by said information processing unit, to said mobile information terminal.

17. An information processing device which registers information provided from a mobile information terminal, in a database, comprising:
a receiver unit capable of receiving, from said mobile information terminal, speech information based on speech inputted by said mobile information terminal, a position information of said mobile information terminal, image information based on an image captured by said mobile information terminal, and additional information relevant to the speech information, the position information and the image information inputted by said mobile information terminal; and
an information processing unit capable of mutually relating and storing the speech information, the position information, the image information and the additional information received by said receiver unit, in the database.

18. An information processing device which provides information registered in a database, to a mobile information terminal having made a request for information provision, comprising:
a receiver unit capable of receiving, from said mobile information terminal speech information based on speech inputted by said mobile information terminal, a position information of said mobile information terminal and image information based on an image captured by said mobile information terminal;
an information processing unit capable of retrieving additional information relevant to the speech information, the position information and the image information received by said receiver unit, from the database having speech information, position information, image information and additional information mutually related and prestored therein; and
a transmitter unit capable of transmitting the additional information retrieved by said information processing unit, to said mobile information terminal.

19. An information processing device as in any one of claims 15 to 18, **characterized in that** said speech information is information which contains a phoneme string of said speech.

20. An information processing device as in claim 17 or 18, **characterized in that** said image information is features of said image.
